# EUROPEAN PATENT SPECIFICATION

(11) **EP 4 265 382 B1**
(45) Date of publication and mention of the grant of the patent: **17.12.2025**
(21) Application number: 21906044.9
(22) Date of filing: 30.07.2021
(51) Int. Cl.: B26D 1/28, B26D 7/26, B29B 9/06

(54) **CUTTER BLADE AND METHOD FOR MANUFACTURING CUTTING BLADE**
SCHNEIDMESSER UND VERFAHREN ZUR HERSTELLUNG DES SCHNEIDMESSERS
LAME DE DISPOSITIF DE COUPE ET PROCÉDÉ DE FABRICATION DE LAME DE COUPE

(30) Priority: 18.12.2020 JP 2020210135
(43) Date of publication of application: 25.10.2023
(73) Proprietor: The Japan Steel Works, Ltd., Tokyo 141-0032 (JP)
(72) Inventor: UEDA, Naoki, Tokyo 141-0032 (JP); TAYA, Ryusei, Tokyo 141-0032 (JP); WATANABE, Yusuke, Tokyo 141-0032 (JP)
(74) Representative: Simmons & Simmons LLP (Munich)
(86) International application number: PCT/JP2021/028456
(87) International publication number: WO 2022/130678

(56) References cited:
- EP-A1- 1 661 660
- CN-A- 107 073 751
- JP-A- 2002 292 164
- JP-A- 2002 292 164
- JP-A- 2003 508 241
- JP-A- 2010 194 914
- JP-A- H05 169 441
- JP-U- H0 740 112
- US-A1- 2002 104 419

## Description

### Technical Field

The present invention relates to a cutter blade and a method for manufacturing a cutter blade.

### Background Art

Patent Literature 1 discloses a cutter blade for cutting a resin material extruded from holes formed in a die plate.

### Citation List

### Patent Literature

Patent Literature 1: Japanese Unexamined Patent Application Publication No. H11-165316

JP 2002 292164 A1 discloses a wear-resistant component, such as a blade tool, where a wear-resistant member is bonded to a body using an adhesive, and the exposed adhesive layer at the joint is protected by a filler, coating, or covering material to improve durability, with options for marking the component's usage limits.

US 2002/104419 A1 discloses a cutting blade being secured to a cutting blade holder by a bonding material such as a glue.

### Summary of Invention

### Technical Problem

When a cutter blade disclosed in Patent Literature 1 or the like is used, it is conceivable to join a hardened layer to the cutter blade by brazing in order to improve the durability of its blade edge. However, since the cutter blade needs to be heated to about 1,000°C to carry out the brazing, its blade edges are deformed. Since additional machining needs to be performed to correct the deformation of the blade edge, the manufacturing cost increases.

Other problems to be solved and novel features will become apparent from descriptions in this specification and accompanying drawings.

### Solution to Problem

The invention is set out in the appended set of claims, claim 1 referring to a cutter blade and claim 7 to a method of manufacturing a cutter blade.

### Advantageous Effects of Invention

According to the above-described embodiment, it is possible to provide a cutter blade and a method for manufacturing a cutter blade capable of reducing the manufacturing cost.

### Brief Description of Drawings

Fig. 1 is a configuration diagram showing an example of an underwater granulation apparatus using cutter blades according to a first embodiment;
Fig. 2 is a perspective diagram showing an example of a die plate in the underwater granulation apparatus using cutter blades according to the first embodiment;
Fig. 3 is a perspective view showing an example of a cutter blade according to the first embodiment;
Fig. 4 is a side view showing the example of the cutter blade according to the first embodiment;
Fig. 5 is a side view showing another example of a cutter blade according to the first embodiment;
Fig. 6 is a flowchart showing an example of a method for manufacturing a cutter blade according to the first embodiment; and
Fig. 7 is a side view showing an example of a cutter blade according to a first modified example of the first embodiment, such blade being outside the scope of the claims when a screw is used instead of adhesive.

### Description of Embodiments

For clarifying the description, the following description and the drawings are partially omitted and simplified as appropriate. Further, the same symbols are assigned to the same or corresponding components throughout the drawings, and redundant descriptions thereof are omitted as appropriate.

### (First Embodiment)

A cutter blade and a method for manufacturing a cutter blade according to the first embodiment will be described. Firstly, an underwater granulation apparatus will be described as an example of an apparatus using cutter blades. After that, a cutter blade and a method for manufacturing a cutter blade will be described.

### <Underwater Granulation Apparatus>

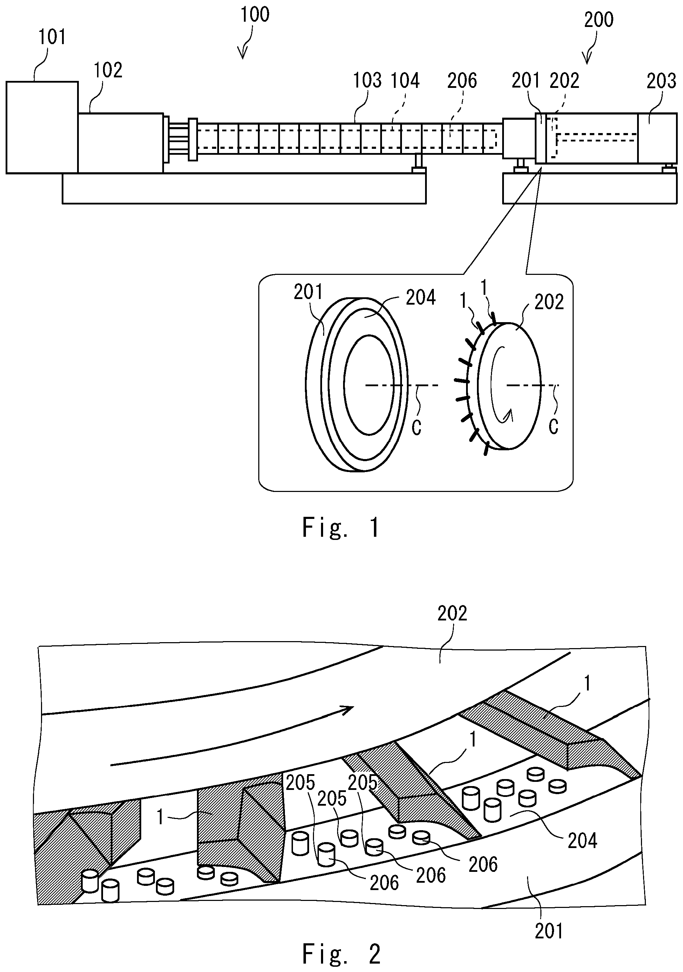

Fig. 1 is a configuration diagram showing an example of an underwater granulation apparatus using cutter blades according to a first embodiment. Fig. 2 is a perspective view showing an example of a die plate in the underwater granulation apparatus using cutter blades according to the first embodiment. In Fig. 1, an exploded view of a part of the underwater granulation apparatus is shown inside a box.

As shown in Fig. 1 and Fig. 2, an underwater granulation apparatus 200 is connected to the downstream side of an extrusion apparatus 100. The extrusion apparatus 100 includes a drive unit 101, a speed reducer 102, a cylinder 103 and a screw 104. The drive unit 101, which is, for example, a motor, transmits its rotation adjusted by the speed reducer 102 to the screw 104. In this way, the screw 104 is rotated by the adjusted power source of the drive unit 101 inside the cylinder 103.

A material 206 supplied into the cylinder 103 from a predetermined part of the cylinder 103 is extruded to the underwater granulation apparatus 200 side by the rotating screw 104. The supplied material 206 is, for example, a resin material. The extrusion apparatus 100 plasticizes and kneads, for example, a resin material by heating it inside the cylinder 103 and by the rotation of the screw 104, and extrudes the plasticized and kneaded resin material to the underwater granulation apparatus 200 as a molten resin.

The underwater granulation apparatus 200 includes a die plate 201, a cutter blade holding part 202, and a drive unit 203. The die plate 201 and the cutter blade holding part 202 are disposed underwater. The die plate 201 has a plate surface 204. A plurality of holes 205 are formed in the plate surface 204. The material 206 extruded by the rotating screw 104 is extruded from the holes 205 formed in the plate surface 204 onto the plate surface 204. The material 206 extruded onto the plate surface 204 is, for example, a molten resin. In Fig. 2, only some of the holes 205 and some of pieces of the material 206 extruded therefrom are indicated by reference numerals in order to simplify the drawing.

The die plate 201 and the plate surface 204 have a central axis C. The cutter blade holding part 202 is disposed so as to be opposed to the die plate 201. The cutter blade holding part 202 is rotated about the central axis C by the power source of the drive unit 203. The cutter blade holding part 202 holds a plurality of cutter blades 1. In Fig. 1, only some of the cutter blades 1 are indicated by reference numerals in order to simplify the drawing.

For example, the cutter blades 1 are held (i.e., positioned) at equal intervals on the peripheral edge of the circular cutter blade holding part 202. Further, as the cutter blade holding part 202 rotates, each of the cutter blades 1 slides over the plate surface 204. As a result, the cutter blades 1 cut a plurality of pieces of the material 206 extruded from the holes 205 onto the plate surface 204. For example, a plurality of pieces of the molten resin extruded from the holes 205 onto the plate surface 204 are cut by the cutter blades 1. The plurality of cut pieces of the molten resin solidify underwater and become resin pellets.

### <Cutter Blade>

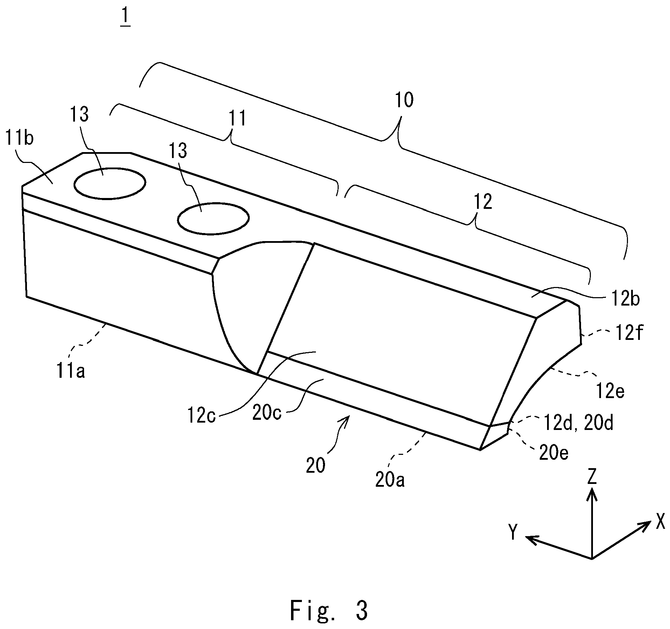

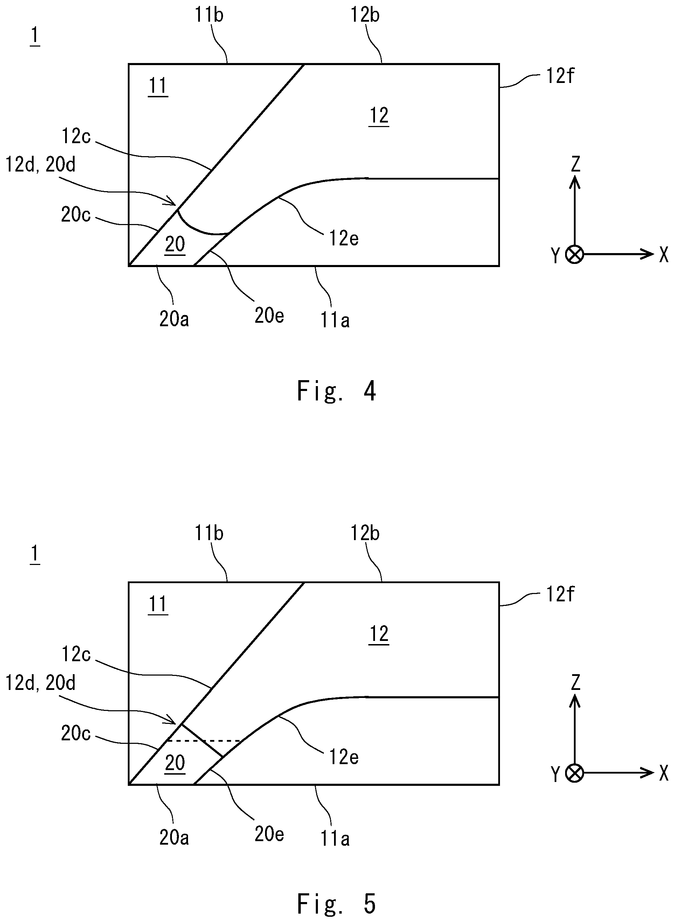

Next, the cutter blade 1 will be described. Fig. 3 is a perspective view showing an example of the cutter blade 1 according to the first embodiment. Fig. 4 is a side view showing the example of the cutter blade 1 according to the first embodiment. As shown in Figs. 3 and 4, the cutter blade 1 includes a base metal part 10 and a blade edge part 20. The blade edge part 20 is bonded to the base metal part 10 by an adhesive.

Note that an XYZ-orthogonal axis system is introduced to explain the cutter blade 1. In the state in which the cutter blade 1 is placed over the plate surface 204, the direction perpendicular to the plate surface 204 is defined as the Z-axis direction. The direction in which the blade edge extends is defined as the Y-direction. The direction perpendicular to the Y- and Z-axis directions is defined as the X-axis direction.

### <Base Metal Part>

The base metal part 10 includes an attaching part 11 and a ridge part 12. The attaching part 11 and the ridge part 12 are connected to each other in the Y-axis direction. As its material, the base metal part 10 contains, for example, stainless steel. Note that the material of the base metal part 10 is not limited to the material containing stainless steel, but may contain other metals, ceramics, plastics, or the like.

The attaching part 11 is connected the cutter blade holding part 202 which transmits the power for sliding the cutter blade 1 along the plate surface 204. The attaching part 11 is formed, for example, in a part of the base metal part 10 on the +Y axis direction side thereof. The attaching part 11 has, for example, a quadrangular prism shape, and has a bottom surface 11a and an upper surface 11b. The bottom surface 11a is the surface on the -Z axis direction side, and the upper surface 11b is the surface on the +Z axis direction side.

In the attaching part 11, holes 13, which are used to connect the attaching part 11 to the cutter blade holding part 202, are formed. The number of holes 13 may be only one or may be more than one. The holes 13 penetrate (i.e., extend) from the upper surface 11b to the bottom surface 11a. For example, the cutter blade 1 is fixed to the cutter blade holding part 202 by inserting bolts into the holes 13 of the attaching part 11 and holes formed in the cutter blade holding part 202. Note that instead of the holes 13, grooves or the like may be formed in the attaching part 11 as long as they can be used to connect the attaching part 11 to the cutter blade holding part 202.

The ridge part 12 is opposed to the plate surface 204 with the blade edge part 20 interposed therebetween. The blade edge part 20 is bonded to the ridge part 12. The ridge part 12 is formed, for example, in a part of the base metal part 10 on the -Y axis direction side thereof. The ridge part 12 extends, for example, in the Y-axis direction. The ridge part 12 has an upper surface 12b, an inclined surface 12c, a bonding surface 12d, a dug-in surface 12e, and a rear surface 12f. The ridge part 12 has a columnar shape extending in the Y-axis direction, with the upper surface 12b, the inclined surface 12c, the bonding surface 12d, the dug-in surface 12e, and the rear surface 12f being its peripheral surfaces.

The upper surface 12b is, for example, flush with the upper surface 11b of the attaching part 11. The inclined surface 12c is inclined with respect to the upper surface 12b. The angle between the upper surface 12b and the inclined surface 12c is, for example, 135 [deg]. Therefore, the angle between the inclined surface 12c and a plane extending from (i.e., parallel to) the upper surface 12b is 45 [deg].

The bonding surface 12d faces in the -Z axis direction. The bonding surface 12d is the surface to be bonded with the blade edge part 20. The bonding surface 12d of the ridge part 12 is shaped so that it is engaged with the bonding surface 20d of the blade edge part 20. For example, the bonding surface 12d of the ridge part 12 has a convex shape. Specifically, the cross section of the bonding surface 12d perpendicular to the Y-axis direction is convex. In this case, the cross section of the bonding surface 20d of the blade edge part 20 perpendicular to the Y-axis direction is concave.

Note that the bonding surface 12d of the ridge part 12 may have a concave shape and the bonding surface 20d of the blade edge part 20 may have a convex shape. Alternatively, the bonding surface 12d of the ridge part 12 and the bonding surface 20d of the blade edge part 20 may be both planar (i.e., flat) as shown in Fig. 5. In the case where the bonding surface 12d of the ridge part 12 and the bonding surface 20d of the blade edge part 20 are both planar (i.e., flat), the bonding surface 12d and the bonding surface 20d may be parallel to the bottom surface 11a, or the bonding surface 12d and the bonding surface 20d may be inclined with respect to the bottom surface 11a. For example, the bonding surface 12d and the bonding surface 20d may be perpendicular to the inclined surface 12c.

The bonding surface 12d may have surface roughness within a certain microscopic height (Rz: 5 to 30 µm). As a result, the bonding strength of the adhesive can be improved.

The dug-in surface 12e is a surface opposed to the upper surface 12b and the inclined surface 12c. The dug-in surface 12e is, for example, curved in a concave shape. The dug-in surface 12e is smoothly connected to the dug-in surface 20e. The rear surface 12f faces in the +X axis direction.

### <Blade Edge Part>

The blade edge part 20 is a part that slides over the plate surface 204. The blade edge part 20 slides along the plate surface 204 of the die plate 201 having the plate surface 204 in which the holes 205 are formed, and thereby cuts a plurality of pieces of the material 206 extruded from the holes 205 onto the plate surface 204. As its material, the blade edge part 20 contains, for example, a hardened layer such as a TiC cermet. Note that the material of the blade edge part 20 is not limited to those containing a TiC cermet, but may contain other metals, ceramics, plastics, or the like.

The blade edge part 20 is bonded to the base metal part 10 by an adhesive. The adhesive is, for example, an epoxy adhesive. The adhesive is preferably one that can be easily peeled off when it is heated to a predetermined temperature. In this way, the blade edge part 20 bonded to the base metal part 10 can be replaced with a new one.

The blade edge part 20 extends, for example, in the Y-axis direction. The blade edge part 20 includes a sliding surface 20a, an inclined surface 20c, a bonding surface 20d, and a dug-in surface 20e. The blade edge part 20 has, for example, a columnar shape extending in the Y-axis direction, with the sliding surface 20a, the inclined surface 20c, the bonding surface 20d, and dug-in surface 20e being its peripheral surfaces.

The sliding surface 20a slides over the plate surface 204. As the sliding surface 20a slides over the plate surface 204, a plurality of pieces of the material 206 extruded from the holes 205 onto the plate surface 204 are cut by the blade edge. The sliding surface 20a is shaped so as to conform to the shape of the plate surface 204 so that the plate surface 204 can slide thereover. In the case where the plate surface 204 is planar (i.e., flat), the sliding surface 20a is also planar (i.e., flat). In the case where the cross section of the plate surface 204 perpendicular to the X-axis direction is curved, the cross section of the sliding surface 20a perpendicular to the X-axis direction may also be curved in conformity with the curvature of the plate surface 204.

In the case where the sliding surface 20a is planar (i.e., flat), the sliding surface 20a may be flush with the bottom surface 11a of the attaching part 11 in the base metal part 10. Therefore, the base metal part 10 has the bottom surface 11a that is flush with the sliding surface 20a. In this way, the blade edge part 20 can be easily aligned with the base metal part 10 when the blade edge part 20 is bonded to the base metal part 10.

The inclined surface 20c is inclined with respect to the sliding surface 20a. For example, the inclined surface 20c is inclined by 45 [deg] with respect to the sliding surface 20a. The blade edge is formed by the sliding surface 20a and the inclined surface 20c. That is, the angle between the sliding surface 20a and the inclined surface 20c forms the blade edge. The blade edge extends in the Y-axis direction. The inclined surface 20c is flush with the inclined surface 12c. Therefore, a plurality of pieces of the material 206 cut by the blade edge smoothly move over the inclined surface 20c and the inclined surface 12c. Consequently, it is possible to prevent the cut pieces of the material 206 from being damaged.

The bonding surface 20d is a surface opposed to the sliding surface 20a. The bonding surface 20d is the surface to be bonded with the base metal part 10. The bonding surface 20d is bonded to the bonding surface 12d of the ridge part 12. The bonding surface 20d of the blade edge part 20 is shaped so that it is engaged with the bonding surface 12d of the ridge part 12. For example, the bonding surface 20d of the blade edge part 20 has a concave shape. Specifically, the cross section of the bonding surface 20d of the blade edge part 20 perpendicular to the Y-axis direction is concave. In this case, the cross section of the bonding surface 12d of the ridge part 12 perpendicular to the Y-axis direction is also convex.

Alternatively, as described above, the bonding surface 12d of the ridge part 12 may have a concave shape and the bonding surface 20d of the blade edge part 20 may have a convex shape, or the bonding surface 12d of the ridge part 12 and the bonding surface 20d of the blade edge part 20 may be both planar (i.e., flat).

The bonding surface 20d may have surface roughness within a certain microscopic height (Rz: 5 to 30 µm). As a result, the bonding strength of the adhesive can be improved.

The dug-in surface 20e is a surface opposed to the inclined surface 20c. The dug-in surface 20e is, for example, curved in a concave shape. The dug-in surface 20e is smoothly connected to the dug-in surface 12e.

### <Method for Manufacturing Cutter Blade>

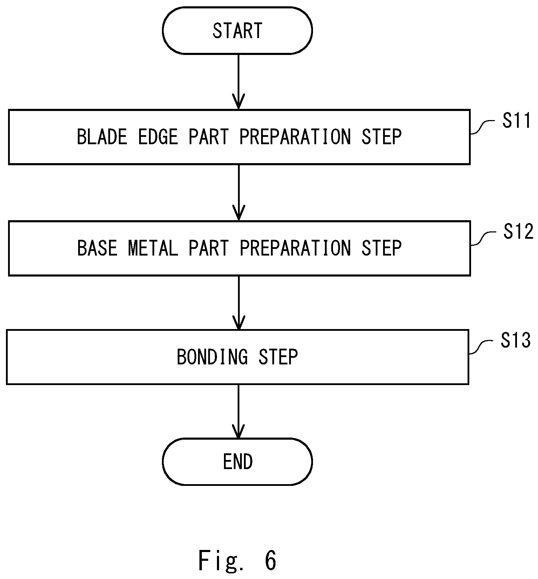

Next, a method for manufacturing a cutter blade 1 according to this embodiment will be described. Fig. 6 is a flowchart showing an example of a method for manufacturing a cutter blade 1 according to the first embodiment.

As shown in Fig. 6, the method for manufacturing a cutter blade 1 includes a blade edge part preparation step (Step S11), a base metal part preparation step (Step S12), and a bonding step (Step S13). Note that the order of the blade edge part preparation step and the base metal part preparation step may be interchanged. That is, the base metal part preparation step may be performed in the step S11, and the blade edge part preparation step may be performed in the step S12.

Firstly, as shown in a step S11, a blade edge part 20 is prepared in the blade edge part preparation step. The blade edge part 20 slides along the plate surface 204 of the die plate 201, the plate surface 204 having the holes 205 formed therein, and thereby cuts a plurality of pieces of the material 206 extruded from the holes 205 onto the plate surface 204. In the blade edge part preparation step, the blade edge part 20 may have a sliding surface 20a that slides over the plate surface 204.

In the blade edge part preparation step, the bonding surface 20d of the blade edge part 20 may have surface roughness within a certain microscopic height (Rz: 5 to 30 µm). Further, in the blade edge part preparation step, the bonding surface 20d of the blade edge part 20, which is to be bonded with the ridge part 12, may have a concave shape.

Then, as shown in a step S12, a base metal part 10 is prepared in the base metal part preparation step. In the base metal part preparation step, the base metal part 10 may have a bottom surface 11a. Further, in the base metal part preparation step, the base metal part 10 may have an attaching part 11 and a ridge part 12. The attaching part 11 is connected a cutter blade holding part 202 which transmits the power for sliding the blade edge part 20 along the plate surface 204. The ridge part 12 is opposed to the plate surface 204 with the blade edge part 20 interposed therebetween. The blade edge part 20 is bonded to the ridge part 12.

In the base metal part preparation step, the bonding surface 12d of the ridge part 12 may have surface roughness within a certain microscopic height (Rz: 5 to 30 µm). Further, in the base metal part preparation step, the bonding surface 12d of the ridge part 12, which is to be bonded with the blade edge part 20, may have a convex shape.

Next, as shown in a step S13, the blade edge part 20 is bonded to the base metal part 10 by an adhesive in the bonding step. For example, the blade edge part 20 is bonded to the base metal part 10 by an adhesive at a room temperature. In the bonding step, the blade edge part 20 may be bonded to the base metal part 10 in such a manner that the blade edge part 20 can be replaced with a new one. Further, in the bonding step, the sliding surface 20a may be bonded to the bottom surface 11a of the base metal part 10 so that they are flush with each other. Specifically, in the bonding step, the sliding surface 20a may be bonded to the bottom surface 11a of the attaching part 11 so that they are flush with each other. Through the above-described processes, the cutter blade 1 can be manufactured.

Next, a comparative example will be described before describing advantageous effects of the above-described embodiment. After that, the advantageous effects of the above-described embodiment will be described while comparing them with those of the comparative example.

### (Comparative Example)

For example, as a comparative example, in the case of a cutter blade disclosed in Patent Literature 1 or the like, it is conceivable to join a hardened layer to the cutter blade by brazing in order to improve the durability of its blade edge. However, since the cutter blade needs to be heated to about 1,000°C to carry out the brazing, its blade edges are deformed. Since additional machining needs to be performed to correct the deformation of the blade edge, the manufacturing cost increases.

Further, since the brazing has to be carried out in a furnace, a worker or the like cannot see a series of processes. Therefore, any direct work related to the quality of the brazed part cannot be performed, thus making it difficult to control the yield of the brazing.

Further, since the braze-bonded hardened layer does not peel off even when it is heated to a high temperature, the hardened layer worn due to friction and the like cannot be replaced. Therefore, when the cutter blade is used for a certain period of time, it has to be scrapped. Therefore, the manufacturing cost increases.

Next, advantageous effects of this embodiment will be explained. In the cutter blade 1 according to this embodiment, the blade edge part 20 is bonded to the base metal part 10 by using an adhesive. Therefore, there is no need to heat the blade edge part 20 and the base metal part 10, which would be necessary in the case of brazing, so that it is possible to prevent them from being deformed. As a result, additional machining, which would otherwise need to be performed to correct the deformation of the blade edge part 20 and the base metal part 10, is not required, so that the manufacturing cost can be greatly reduced.

A worker or the like who performs the bonding operation between the blade edge part 20 and the base metal part 10 can perform the bonding operation while directly observing the operation. Therefore, it is possible to carry out quality control and thereby to improve the yield.

The blade edge part 20 bonded by the adhesive can be easily peeled off from the base metal part 10 by, for example, heating them to a predetermined temperature. Therefore, the blade edge part 20 that has been worn due to friction and the like can be easily replaced at a low cost, while the base metal part 10 can be reused.

The sliding surface 20a of the blade edge part 20 and the bottom surface 11a of the base metal part 10 are flushed with each other. Therefore, the blade edge part 20 can be easily aligned with the ridge part 12 when the blade edge part 20 is bonded to the ridge part 12. For example, the base metal part 10 and the blade edge part 20 can be aligned with each other over a flat surface, and can be bonded to each other.

At least one of the bonding surface 12d of the ridge part 12 and the bonding surface 20d of the blade edge part 20 has surface roughness within a certain microscopic height (Rz: 5 to 30 µm). As a result, it is possible to improve the adhesion of the adhesive to the bonding surface 12d and the bonding surface 20d. Further, it is possible increase the contact area, and thereby to improve the bonding strength between the bonding surface 12d and the bonding surface 20d.

By forming one of the bonding surface 20d of the blade edge part 20 and the bonding surface 12d of the ridge part 12 in a convex shape and forming the other in a concave shape, it is possible increase the contact area, and thereby to improve the bonding strength. Further, by the engagement of the concave bonding surface with the convex bonding surface, the bonding strength between these bonding surfaces can be improved.

By forming the bonding surface 20d of the blade edge part 20 in a concave shape and forming the bonding surface 12d of the ridge part 12 in a convex shape, it is possible to make keeping the adhesive applied to the bonding surface 20d easy at the time of the bonding. For example, when the blade edge part 20 is bonded to the ridge part 12, the adhesive can be prevented from spilling out from the concave part adopted to the bonding surface 20d.

### (First Modified Example)

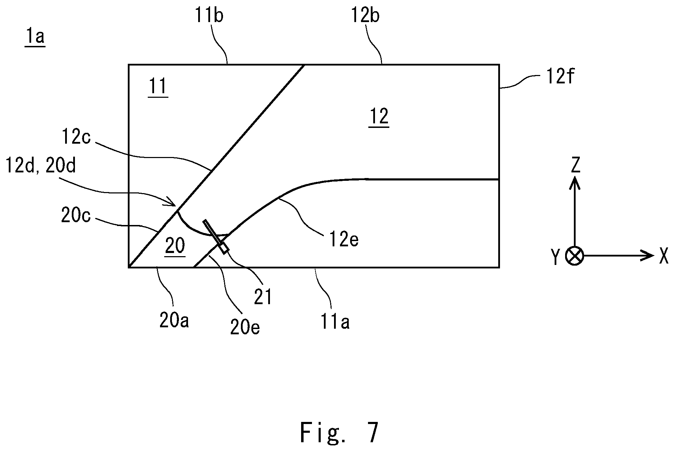

Next, a first modified example of the first embodiment will be described. In the above-described embodiment, the blade edge part 20 is bonded to the base metal part 10 by an adhesive. However, instead of using the adhesive, the blade edge part 20 may be fixed by using a screw or the like. Fig. 7 is a side view showing an example of a cutter blade 1a according to the first modified example of the first embodiment. The embodiment in which the blade edge part 20 is fixed using only a screw is outside the scope of the claims.

As shown in Fig. 7, the cutter blade 1a includes a base metal part 10 and a blade edge part 20, and the blade edge part 20 is fixed to the ridge part 12 of the base metal part 10 by a screw 21. For example, the blade edge part 20 is fixed by a screw that reaches, from the dug-in surface 20e, the ridge part 12. Note that the fixing by a screw is not limited to a screw reaching, from the dug-in surface 20e, the ridge part 12, but may be a screw reaching, from the dug-in surface 12e, the blade edge part 20 or a screw reaching, from the upper surface 12b, the blade edge part 20 as long as it can fix the blade edge part 20 to the ridge part 12. Alternatively, a pin may be used in place of the screw 21.

Therefore, the cutter blade 1a according to this modified example includes the blade edge part 20 that slides along the plate surface 204 of the die plate 201, the plate surface 204 having the holes 205 formed therein, and thereby cuts a plurality of pieces of the material 206 extruded from the holes 205 onto the plate surface 204, and the base metal part to which the blade edge part 20 is fixed by a screw or a pin. **In** this case, the bonding surface 20d of the blade edge part 20 and the bonding surface 12d of the ridge part 12 may be called (i.e., regarded as) contact surfaces.

Even in the cutter blade 1a according to this modified example, the blade edge part 20 bonded to the base metal part 10 can be replaced with a new one. Further, the heat treatment, which is necessary to peel off the adhesive in order to replace the blade edge part 20 with a new one in the above-described embodiment, can also be made unnecessary. The rest of the configuration and advantageous effects are the same as those described in the first embodiment.

### (Second Modified Example)

Next, a second modified example of the first embodiment will be described. In the above-described first modified example, the blade edge part 20 is fixed to the base metal part 10 by a screw or the like. In contrast, in this modified example, an adhesive and a screw or the like are both used in combination. Specifically, a cutter blade according to this modified example includes a base metal part 10 and a blade edge part 20, and the blade edge part 20 is fixed to the ridge part 12 of the base metal part 10 by an adhesive and a screw 21 or the like. Note that a pin may be used in place of the screw 21.

For example, the bonding surface 20d of the blade edge part 20 and the bonding surface 12d of the ridge part 12 are bonded to each other by an adhesive. In addition, the blade edge part 20 is further fixed to the base metal part 10 by a screw or a pin. Even in this modified example, the blade edge part 20 bonded to the base metal part 10 can be replaced with a new one. Further, since the adhesive and the screw or the like are used in combination, the blade edge part 20 can be firmly fixed to the base metal part 10. The rest of the configuration and advantageous effects are the same as those described in the first embodiment and the first modified example.

The present invention made by the inventors of the present application has been described above in a concrete manner based on embodiments. However, the present invention is not limited to the above-described embodiments.

### Reference Signs List

- 1, 1a: CUTTER BLADE
- 10: BASE METAL PART
- 11: ATTACHING PART
- 11a: BOTTOM SURFACE
- 11b: TOP SURFACE
- 12: RIDGE PART
- 12b: TOP SURFACE
- 12c: INCLINED SURFACE
- 12d: BONDING SURFACE
- 12e: DUG-IN SURFACE
- 12f: REAR SURFACE
- 13: HOLE
- 20: BLADE EDGE PART
- 20a: SLIDING SURFACE
- 20c: INCLINED SURFACE
- 20d: BONDING SURFACE
- 20e: DUG-IN SURFACE
- 21: SCREW
- 100: EXTRUSION APPARATUS
- 101: DRIVE UNIT
- 102: SPEED REDUCER
- 103: CYLINDER
- 104: SCREW
- 200: UNDERWATER GRANULATION APPARATUS
- 201: DIE PLATE
- 202: CUTTER BLADE HOLDING PART
- 203: DRIVE UNIT
- 204: PLATE SURFACE
- 205: HOLE
- 206: MATERIAL

## Claims

1. A cutter blade (1) comprising:
a blade edge part (20) configured to slide along a plate surface (204) of a die plate (201), the plate surface (204) having a hole (205) formed therein, and thereby to cut a material (206) extruded from the hole (205) onto the plate surface (204); and
a base metal part (10) to which the blade edge part (20) is bonded by an adhesive,
wherein the blade edge part (20) has a sliding surface (20a) configured to slide over the plate surface (204), and the base metal part (10) has a bottom surface (11a) that is flush with the sliding surface (20a),
**characterized in that** the base metal part (10) comprises:
an attaching part (11) configured to be connected to a cutter blade holding part (202) configured to transmit power for sliding the cutter blade (1) along the plate surface (204); and
a ridge part (12) opposed to the plate surface (204) with the blade edge part (20) interposed therebetween, the blade edge part (20) being bonded to the ridge part (12), and
a bottom surface (11a) of the attaching part (11) is flush with the sliding surface (20a).

2. The cutter blade (1) according to Claim 1, wherein the blade edge part (20) bonded to the base metal part (10) can be replaced.

3. The cutter blade (1) according to Claim 1 or 2, wherein regarding bonding surfaces (12d, 20d) between the base metal part (10) and the blade edge part (20), at least one of a bonding surface (12d) of the ridge part (12) and a bonding surface (20d) of the blade edge part (20) has surface roughness within a microscopic height Rz of 5 to 30 µm.

4. The cutter blade (1) according to any one of Claims 1 to 3, wherein regarding bonding surfaces (12d, 20d) between the base metal part (10) and the blade edge part (20), a bonding surface (12d) of the ridge part (12) has a convex shape and a bonding surface (20d) of the blade edge part (20) has a concave shape.

5. The cutter blade (1) according to any one of Claims 1 to 3, wherein regarding bonding surfaces (12d, 20d) between the ridge part (12) and the blade edge part (20), a bonding surface (12d) of the ridge part (12) is planar and a bonding surface (20d) of the blade edge part (20) is also planar.

6. The cutter blade (1) according to any one of Claims 1 to 5, wherein the blade edge part (20) is further fixed to the base metal part (10) by a screw (104) or a pin.

7. A method for manufacturing a cutter blade (1), comprising the steps of:
(A) preparing (S11) a blade edge part configured to slide along a plate surface of a die plate, the plate surface having a hole formed therein, and thereby to cut a material extruded from the hole onto the plate surface;
(B) preparing (S12) a base metal part; and
(C) bonding (S13) the blade edge part to the base metal part by an adhesive,
wherein
in the (A) step, the blade edge part is prepared so that the blade edge part has a sliding surface configured to slide over the plate surface,
in the (B) step, the base metal part is prepared so that the base metal part has a bottom surface, and
in the (C) step, the sliding surface is bonded to the bottom surface of the base metal part so that the sliding surface is flush with the bottom surface,
**characterized in that**
in the (B) step, the base metal part is prepared so that the base metal part comprises:
an attaching part configured to be connected to a cutter blade holding part configured to transmit power for sliding the cutter blade along the plate surface; and
a ridge part opposed to the plate surface with the blade edge part interposed therebetween, the blade edge part being bonded to the ridge part, and
in the (C) step, the sliding surface is bonded to the bottom surface of the attaching part so that the sliding surface is flush with the bottom surface.

8. The method for manufacturing a cutter blade according to Claim 7, wherein in the (C) step, the blade edge part is bonded to the base metal part in such a manner that the blade edge part can be replaced.

9. The method for manufacturing a cutter blade according to Claim 7 or 8, wherein in at least one of the (A) step and the (B) step, regarding bonding surfaces between the base metal part and the blade edge part, at least one of a bonding surface of the ridge part and a bonding surface of the blade edge part has surface roughness within a microscopic height Rz of 5 to 30 µm.

10. The method for manufacturing a cutter blade according to any one of Claims 7 to 9, wherein
in the (A) step, a bonding surface of the blade edge part, which is to be bonded with the ridge part, is formed in a concave shape, and
in the (B) step, a bonding surface of the ridge part, which is to be bonded with the blade edge part, is formed in a convex shape.

11. The method for manufacturing a cutter blade according to any one of Claims 7 to 9, wherein
in the (A) step, a bonding surface of the blade edge part, which is to be bonded with the ridge part, is formed in a planar shape, and
in the (B) step, a bonding surface of the ridge part, which is to be bonded with the blade edge part, is also formed in a planar shape.

12. The method for manufacturing a cutter blade according to any one of Claims 7 to 11, wherein in the (C) step, the blade edge part is further fixed to the base metal part by a screw or a pin.

## Patentansprüche

1. Schneiderklinge (1), umfassend:
einen Schneidkantenabschnitt (20), der dazu eingerichtet ist, entlang einer Plattenoberfläche (204) einer Matrize (201) zu gleiten, wobei die Plattenoberfläche (204) ein darin ausgebildetes Loch (205) aufweist, und dadurch ein aus dem Loch (205) auf die Plattenoberfläche (204) extrudiertes Material (206) zu schneiden; und einen Basismetallabschnitt (10), mit dem der Schneidkantenabschnitt (20) mittels eines Klebstoffs verbunden ist,
wobei der Schneidkantenabschnitt (20) eine Gleitfläche (20a) aufweist, die dazu eingerichtet ist, über die Plattenoberfläche (204) zu gleiten, und der Basismetallabschnitt (10) eine Unterseite (11a) aufweist, die bündig mit der Gleitfläche (20a) ist,
**dadurch gekennzeichnet, dass** der Basismetallabschnitt (10) Folgendes umfasst:
einen Befestigungsabschnitt (11), der dazu eingerichtet ist, mit einem Schneiderklingenhalter (202) verbunden zu werden, der die Kraft zum Gleiten der Schneiderklinge (1) entlang der Plattenoberfläche (204) überträgt; und
einen Gratabschnitt (12), der der Plattenoberfläche (204) mit dem Schneidkantenabschnitt (20) dazwischen gegenüberliegt, wobei der Schneidkantenabschnitt (20) mit dem Gratabschnitt (12) verbunden ist, und eine Unterseite (11a) des Befestigungsabschnitts (11) bündig mit der Gleitfläche (20a) ist.

2. Schneiderklinge (1) nach Anspruch 1, wobei der mit dem Basismetallabschnitt (10) verbundene Schneidkantenabschnitt (20) austauschbar ist.

3. Schneiderklinge (1) nach Anspruch 1 oder 2, wobei hinsichtlich der Klebeflächen (12d, 20d) zwischen dem Basismetallabschnitt (10) und dem Schneidkantenabschnitt (20) mindestens eine der Klebefläche (12d) des Gratabschnitts (12) und der Klebefläche (20d) des Schneidkantenabschnitts (20) eine Oberflächenrauheit mit einer mikroskopischen Höhe Rz von 5 bis 30 µm aufweist.

4. Schneiderklinge (1) nach einem der Ansprüche 1 bis 3, wobei hinsichtlich der Klebeflächen (12d, 20d) zwischen dem Basismetallabschnitt (10) und dem Schneidkantenabschnitt (20) die Klebefläche (12d) des Gratabschnitts (12) eine konvexe Form und die Klebefläche (20d) des Schneidkantenabschnitts (20) eine konkave Form aufweist.

5. Schneiderklinge (1) nach einem der Ansprüche 1 bis 3, wobei hinsichtlich der Klebeflächen (12d, 20d) zwischen dem Gratabschnitt (12) und dem Schneidkantenabschnitt (20) die Klebefläche (12d) des Gratabschnitts (12) plan und die Klebefläche (20d) des Schneidkantenabschnitts (20) ebenfalls plan ist.

6. Schneiderklinge (1) nach einem der Ansprüche 1 bis 5, wobei der Schneidkantenabschnitt (20) zusätzlich mit einer Schraube (104) oder einem Stift am Basismetallabschnitt (10) befestigt ist.

7. Verfahren zur Herstellung einer Schneiderklinge (1), umfassend die Schritte:
(A) Vorbereiten (S11) eines Schneidkantenabschnitts, der dazu eingerichtet ist, entlang einer Plattenoberfläche einer Matrize zu gleiten, wobei die Plattenoberfläche ein darin ausgebildetes Loch aufweist, und dadurch ein aus dem Loch auf die Plattenoberfläche extrudiertes Material zu schneiden;
(B) Vorbereiten (S12) eines Basismetallabschnitts; und
(C) Verbinden (S13) des Schneidkantenabschnitts mit dem Basismetallabschnitt mittels eines Klebstoffs,
wobei
im Schritt (A) der Schneidkantenabschnitt so vorbereitet wird, dass er eine Gleitfläche aufweist, die dazu eingerichtet ist, über die Plattenoberfläche zu gleiten, im Schritt (B) der Basismetallabschnitt so vorbereitet wird, dass er eine Unterseite aufweist, und
im Schritt (C) die Gleitfläche mit der Unterseite des Basismetallabschnitts so verbunden wird, dass die Gleitfläche bündig mit der Unterseite ist,
**dadurch gekennzeichnet, dass**
im Schritt (B) der Basismetallabschnitt so vorbereitet wird, dass er Folgendes umfasst:
einen Befestigungsabschnitt, der dazu eingerichtet ist, mit einem Schneiderklingenhalter verbunden zu werden, der die Kraft zum Gleiten der Schneiderklinge entlang der Plattenoberfläche überträgt; und
einen Gratabschnitt, der der Plattenoberfläche mit dem Schneidkantenabschnitt dazwischen gegenüberliegt, wobei der Schneidkantenabschnitt mit dem Gratabschnitt verbunden ist, und
im Schritt (C) die Gleitfläche mit der Unterseite des Befestigungsabschnitts so verbunden wird, dass die Gleitfläche bündig mit der Unterseite ist.

8. Verfahren zur Herstellung einer Schneiderklinge nach Anspruch 7, wobei im Schritt (C) der Schneidkantenabschnitt so mit dem Basismetallabschnitt verbunden wird, dass der Schneidkantenabschnitt austauschbar ist.

9. Verfahren zur Herstellung einer Schneiderklinge nach Anspruch 7 oder 8, wobei in mindestens einem der Schritte (A) und (B) hinsichtlich der Klebeflächen zwischen dem Basismetallabschnitt und dem Schneidkantenabschnitt mindestens eine der Klebefläche des Gratabschnitts und der Klebefläche des Schneidkantenabschnitts eine Oberflächenrauheit mit einer mikroskopischen Höhe Rz von 5 bis 30 µm aufweist.

10. Verfahren zur Herstellung einer Schneiderklinge nach einem der Ansprüche 7 bis 9, wobei
im Schritt (A) eine Klebefläche des Schneidkantenabschnitts, die mit dem Gratabschnitt verbunden werden soll, in konkaver Form ausgebildet wird, und
im Schritt (B) eine Klebefläche des Gratabschnitts, die mit dem Schneidkantenabschnitt verbunden werden soll, in konvexer Form ausgebildet wird.

11. Verfahren zur Herstellung einer Schneiderklinge nach einem der Ansprüche 7 bis 9, wobei
im Schritt (A) eine Klebefläche des Schneidkantenabschnitts, die mit dem Gratabschnitt verbunden werden soll, in planarer Form ausgebildet wird, und
im Schritt (B) eine Klebefläche des Gratabschnitts, die mit dem Schneidkantenabschnitt verbunden werden soll, ebenfalls in planarer Form ausgebildet wird.

12. Verfahren zur Herstellung einer Schneiderklinge nach einem der Ansprüche 7 bis 11, wobei im Schritt (C) der Schneidkantenabschnitt zusätzlich mit einer Schraube oder einem Stift am Basismetallabschnitt befestigt wird.

## Revendications

1. Lame de coupe (1) comprenant :
une partie de tranchant (20) configurée pour glisser le long d'une surface de plaque (204) d'une plaque de matrice (201), la surface de plaque (204) comportant un trou (205) formé dans celle-ci, et pour couper ainsi un matériau (206) extrudé depuis le trou (205) sur la surface de plaque (204) ; et
une partie métallique de base (10) à laquelle la partie de bord de lame (20) est liée par un adhésif,
dans laquelle la partie de bord de lame (20) comporte une surface de glissement (20a) configurée pour glisser sur la surface de plaque (204), et la partie métallique de base (10) comporte une surface inférieure (11a) qui affleure la surface de glissement (20a),
**caractérisé en ce que** la partie métallique de base (10) comprend :
une partie de fixation (11) configurée pour être reliée à une partie de maintien de lame de coupe (202) configurée pour transmettre la puissance afin de faire glisser la lame de coupe (1) le long de la surface de plaque (204) ; et
une partie en arête (12) opposée à la surface de plaque (204) avec la partie de bord de lame (20) interposée entre elles, la partie de bord de lame (20) étant liée à la partie en arête (12), et
une surface inférieure (11a) de la partie de fixation (11) étant au même niveau que la surface de glissement (20a).

2. La lame de coupe (1) selon la revendication 1, dans laquelle la partie de bord de lame (20) liée à la partie métallique de base (10) peut être remplacée.

3. Lame de coupe (1) selon la revendication 1 ou 2, dans laquelle, en ce qui concerne les surfaces de liaison (12d, 20d) entre la partie métallique de base (10) et la partie de bord de lame (20), au moins l'une d'une surface de liaison (12d) de la partie en arête (12) et d'une surface de liaison (20d) de la partie formant le tranchant de la lame (20) présente une rugosité de surface comprise entre 5 et 30 µm en hauteur microscopique Rz.

4. La lame de coupe (1) selon l'une quelconque des revendications 1 à 3, dans laquelle, en ce qui concerne les surfaces de liaison (12d, 20d) entre la partie en métal de base (10) et la partie formant le tranchant de la lame (20), une surface de liaison (12d) de la partie formant arête (12) a une forme convexe et une surface de liaison (20d) de la partie formant le tranchant de la lame (20) a une forme concave.

5. Lame de coupe (1) selon l'une quelconque des revendications 1 à 3, dans laquelle, en ce qui concerne les surfaces de liaison (12d, 20d) entre la partie arête (12) et la partie tranchante (20), une surface de liaison (12d) de la partie arête (12) est plane et une surface de liaison (20d) de la partie tranchante (20) est également plane.

6. La lame de coupe (1) selon l'une quelconque des revendications 1 à 5, dans laquelle la partie de bord de lame (20) est en outre fixée à la partie métallique de base (10) par une vis (104) ou une goupille.

7. Procédé de fabrication d'une lame de coupe (1), comprenant les étapes suivantes :
(A) préparer (S11) une partie de bord de lame configurée pour glisser le long d'une surface de plaque d'une plaque de matrice, la surface de plaque comportant un trou formé dans celle-ci, et ainsi couper un matériau extrudé depuis le trou sur la surface de plaque ;
(B) préparer (S12) une partie métallique de base ; et
(C) coller (S13) la partie de bord de lame à la partie de métal de base à l'aide d'un adhésif,
dans lequel
dans l'étape (A), la partie de bord de lame est préparée de telle sorte que la partie de bord de lame présente une surface de glissement configurée pour glisser sur la surface de plaque,
dans l'étape (B), la pièce métallique de base est préparée de manière à ce que la pièce métallique de base présente une surface inférieure, et
dans l'étape (C), la surface de glissement est collée à la surface inférieure de la partie en métal de base de manière à ce que la surface de glissement affleure la surface inférieure,
**caractérisé en ce que**
dans l'étape (B), la partie métallique de base est préparée de manière à ce que la partie métallique de base comprenne :
une partie de fixation configurée pour être reliée à une partie de maintien de lame de coupe configurée pour transmettre la puissance nécessaire pour faire glisser la lame de coupe le long de la surface de la plaque ; et
une partie en arête opposée à la surface de la plaque, la partie de tranchant de la lame étant interposée entre celles-ci, la partie de tranchant de la lame étant liée à la partie en arête, et
dans l'étape (C), la surface de glissement est liée à la surface inférieure de la partie de fixation de manière à ce que la surface de glissement affleure la surface inférieure.

8. Procédé de fabrication d'une lame de coupe selon la revendication 7, dans lequel, à l'étape (C), la partie de bord de lame est liée à la partie de métal de base de telle manière que la partie de bord de lame puisse être remplacée.

9. Procédé de fabrication d'une lame de coupe selon la revendication 7 ou 8, dans lequel, dans au moins l'une des étapes (A) et (B), en ce qui concerne les surfaces de liaison entre la partie métallique de base et la partie formant le tranchant de la lame, au moins l'une d'une surface de liaison de la partie formant arête et d'une surface de liaison de la partie formant le tranchant de la lame présente une rugosité de surface comprise entre 5 et 30 µm en hauteur microscopique Rz.

10. Procédé de fabrication d'une lame de coupe selon l'une quelconque des revendications 7 à 9, dans lequel
dans l'étape (A), une surface de liaison de la partie de bord de lame,
qui doit être liée à la partie arête, est formée en une forme concave, et
dans l'étape (B), une surface de liaison de la partie arête, qui doit être liée à la partie bord de lame, est formée avec une forme convexe.

11. Procédé de fabrication d'une lame de coupe selon l'une quelconque des revendications 7 à 9, dans lequel
dans l'étape (A), une surface de liaison de la partie de bord de lame
qui doit être liée à la partie arête, est formée dans une forme plane, et
dans l'étape (B), une surface de liaison de la partie arête, qui
doit être liée à la partie de bord de lame, est également formée en une forme plane.

12. Procédé de fabrication d'une lame de coupe selon l'une quelconque des revendications 7 à 11, dans lequel, à l'étape (C), la partie de bord de lame est en outre fixée à la partie de métal de base à l'aide d'une vis ou d'une goupille.
